(19)

**Europäisches Patentamt**
**European Patent Office**
**Office européen des brevets**

(11) **EP 2 839 297 B1**

(12) **FASCICULE DE BREVET EUROPEEN**

(45) Date de publication et mention
de la délivrance du brevet:
**26.10.2016 Bulletin 2016/43**

(51) Int Cl.:
*G01P 5/26* *(2006.01)*      *G01S 17/58* *(2006.01)*
*G01S 17/87* *(2006.01)*      *G01S 17/95* *(2006.01)*
*G01S 7/491* *(2006.01)*

(21) Numéro de dépôt: **13742666.4**

(22) Date de dépôt: **15.04.2013**

(86) Numéro de dépôt international:
**PCT/FR2013/050824**

(87) Numéro de publication internationale:
**WO 2013/156723 (24.10.2013 Gazette 2013/43)**

(54) **DISPOSITIF DE DETERMINATION DE LA VITESSE DU VENT COMPORTANT UNE PLURALITE DE SOURCES LASER**

VORRICHTUNG ZUR BESTIMMUNG DER WINDGESCHWINDIGKEIT MIT MEHREREN LASERQUELLEN

DEVICE FOR DETERMINING WIND SPEED COMPRISING A PLURALITY OF LASER SOURCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2012   FR 1253491**

(43) Date de publication de la demande:
**25.02.2015   Bulletin 2015/09**

(73) Titulaires:
• **Epsiline**
  **31100 Toulouse (FR)**
• **Institut National Polytechnique de Toulouse**
  **31400 Toulouse (FR)**

(72) Inventeurs:
• **ZAMAMA, Otmane**
  **F-31000 Toulouse (FR)**
• **TEYSSEYRE, Raphaël**
  **F-31270 Cugnaux (FR)**

• **PERCHOUX, Julien**
  **F-31500 Toulouse (FR)**

(74) Mandataire: **Cabinet Plasseraud**
  **66, rue de la Chaussée d'Antin**
  **75440 Paris Cedex 09 (FR)**

(56) Documents cités:
**WO-A1-2011/042678      US-A1- 2002 024 652**

• **MACHUGA D W ET AL: "A Direct Doppler Detection Lidar System For Atmospheric Winds", COMBINED OPTICAL, MICROWAVE, EARTH AND ATMOSPHERE SENSING, 1993., PROC EEDINGS OF IEEE TOPICAL SYMPOSIUM ON ALBUQUERQUE, NM, USA 22-25 MARCH 1993, NEW YORK, NY, USA,IEEE, US, 22 mars 1993 (1993-03-22), pages 4-7, XP010111168, ISBN: 978-0-7803-0969-2**

**Description**

La présente invention concerne un dispositif de détermination de la vitesse du vent comportant une pluralité de sources laser.

Il est connu, d'une part, de réaliser une mesure de vitesse de vent avec une source laser en réalisant une interférence entre un faisceau issu de ladite source et un autre faisceau réfléchi par une particule portée par le vent et, d'autre part, d'utiliser plusieurs sources pour déterminer la vitesse du vent selon plusieurs composantes.

Ainsi, on connaît par exemple par le document WO-2009/046717 un anémomètre utilisant un système LIDAR (acronyme anglais pour Light Intensity Detection And Ranging soit en français, détection et télémétrie par la lumière). Ce dispositif est capable d'émettre un faisceau laser, focalisé par un système optique, vers un volume de mesure dans lequel des particules présentes dans l'air se déplacent à une vitesse correspondant à la vitesse du vent. Ces particules réfléchissent en partie le faisceau émis envoyant alors un faisceau dit faisceau réfléchi en direction du système optique. En faisant alors interférer le faisceau émis avec le faisceau réfléchi il est possible, par application de la théorie Doppler, de calculer la vitesse des particules, et donc du vent.

Le document WO-2011/042678 divulgue quant à lui un dispositif de mesure de la vitesse du vent dans lequel la mesure est réalisée par « self-mixing », c'est-à-dire qu'on utilise ici un faisceau incident unique. Le faisceau réfléchi est réinjecté dans la cavité optique du laser ayant émis le faisceau incident. On réalise ainsi le mélange interférentiel à l'intérieur même de la cavité du laser. Les interférences sont alors détectées par une photodiode disposée à l'arrière de la source laser.

Le document propose aussi d'utiliser deux sources laser pour mesurer la vitesse dans un plan, ou trois sources pour mesurer dans l'espace.

Le document WO-00/29854 divulgue quant à lui un système à trois axes utilisant un laser hétérodyne qui comprend un support pourvu de trois diodes laser distinctes fournissant des faisceaux de lumière cohérente. Ces faisceaux sont envoyés sur des miroirs dilatateurs de faisceaux qui renvoient un faisceau réfléchi sur un miroir focalisant qui focalise les faisceaux selon trois axes de divergence formant entre eux des angles connus en trois emplacements séparés de l'espace. Le dispositif révélé par ce document utilise des systèmes difficiles à mettre en oeuvre (avec des miroirs pour réaliser des faisceaux réfléchis). On remarque en outre que les trois axes prévus dans le système ne sont pas coplanaires.

La présente invention a alors pour but de fournir un dispositif de détermination de la vitesse du vent qui soit à la fois bon marché et précis. Le dispositif selon la présente invention a pour but de pouvoir déterminer la vitesse du vent lorsque la direction de celui-ci est orientée dans une plage de directions prédéterminée. Avantageusement, la présente invention permettra également la détermination de la vitesse du vent quelle que soit l'orientation de celui-ci. Un autre but de la présente invention est de fournir un dispositif permettant de mesurer de faibles vitesses du vent.

À cet effet, la présente invention propose un dispositif de détermination de la vitesse du vent selon la revendication 1.

La solution proposée ici est donc de disposer deux détecteurs (ensemble comportant une source laser et les moyens de réception d'un faisceau réfléchi) perpendiculairement l'un par rapport à l'autre, chaque détecteur étant un détecteur laser à réinjection optique, connu également sous le nom de détecteur "self-mixing". Cette solution est facile à mettre en oeuvre et permet de déterminer la vitesse du vent dans le plan contenant les directions d'émission des sources laser, c'est-à-dire de déterminer le module du vecteur vitesse du vent et plus précisément le module de la composante dans le plan considéré du vecteur vitesse du vent.

Pour améliorer la qualité de la mesure de la vitesse, notamment lorsque le vent présente certaines directions par rapport aux détecteurs, l'invention propose que le dispositif comporte quatre sources laser formant deux paires de sources, que chaque paire de sources définisse un repère orthogonal dans le plan, et que les deux repères orthogonaux ainsi définis présentent une même origine. Les deux repères orthogonaux sont décalés entre eux d'un angle supérieur à 10°, de manière préférée d'un angle compris entre 30° et 60 °, tel par exemple 45 °.

De préférence, dans un dispositif selon la présente invention, les sources laser utilisées sont toutes semblables.

La présente invention propose en outre un procédé de détermination de la vitesse du vent selon la revendication 5.

Dans ce procédé, les étapes sont réalisées simultanément pour quatre sources laser formant deux paires de sources, chaque paire de sources définissant un repère orthogonal dans le plan, et les deux repères orthogonaux ainsi définis présentant une même origine.

Des détails et avantages de la présente invention apparaîtront mieux de la description qui suit, faite en référence au dessin schématique annexé sur lequel :

La figure 1 est une vue en perspective d'un dispositif de mesure selon la présente invention,
La figure 2 est une vue de dessus du dispositif de la figure 1,
La figure 3 est une vue de côté du dispositif des figures 1 et 2,

La figure 4 est un schéma de principe illustrant le fonctionnement d'un anémomètre laser par réinjection optique,

La figure 5 est une vue en perspective et partiellement en coupe d'un détecteur pouvant être utilisé dans un dispositif tel que représenté sur les figures 1 à 3,

La figure 6 illustre un volume de mesure d'une source laser, et

La figure 7 illustre en vue de dessus les différentes zones de mesure correspondant à une paire de sources laser.

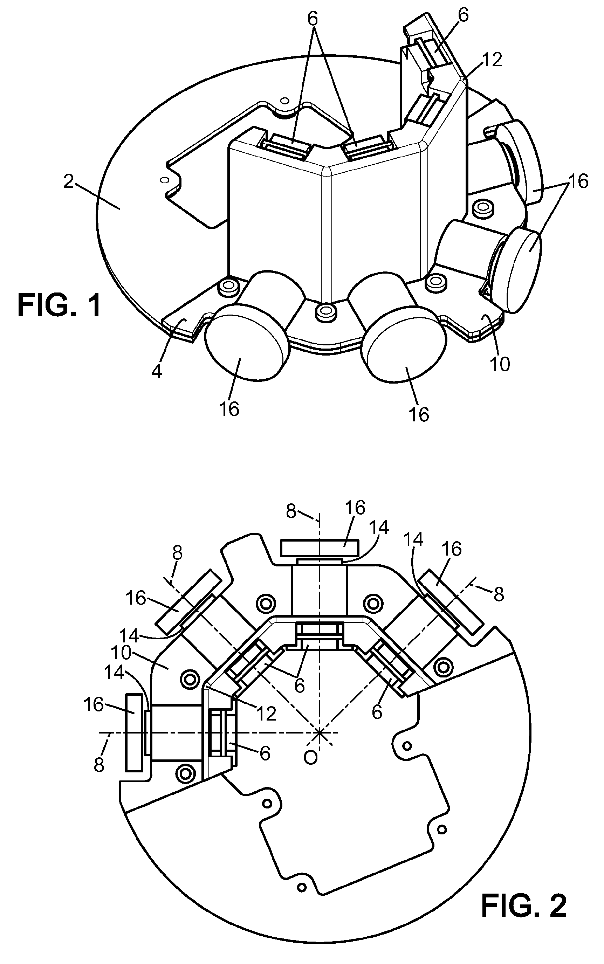

Les figures 1 à 3 illustrent un anémomètre selon la présente invention dans une forme de réalisation préférée. On reconnait notamment sur la figure 1 un support 2, un capot 4 et des cartes électroniques 6.

Le support 2 se présente sous la forme d'une plaque avec un contour sensiblement circulaire. Le support est ajouré en son centre, pour permettre notamment le passage de câbles d'alimentation et de signaux (non représentés). À sa périphérie, le support 2 présente quatre déformations en creux du côté de sa face dite face supérieure. La face opposée du support 2, ou face inférieure, présente des bossages correspondant aux zones en creux précitées. Chaque zone en creux s'étend radialement par rapport au centre du support 2 et présente une surface concave de forme approximativement cylindrique circulaire. Les axes 8 (figure 2) de ces zones cylindriques circulaires sont décalés l'un par rapport à l'autre de 45 degrés et se coupent en un point O disposé sensiblement au centre du support 2.

Le capot 4 présente une première partie 10 qui vient recouvrir les zones en creux de la face supérieure du support 2 ainsi qu'une seconde partie 12 s'étendant sensiblement perpendiculairement au plan de la plaque du support 2.

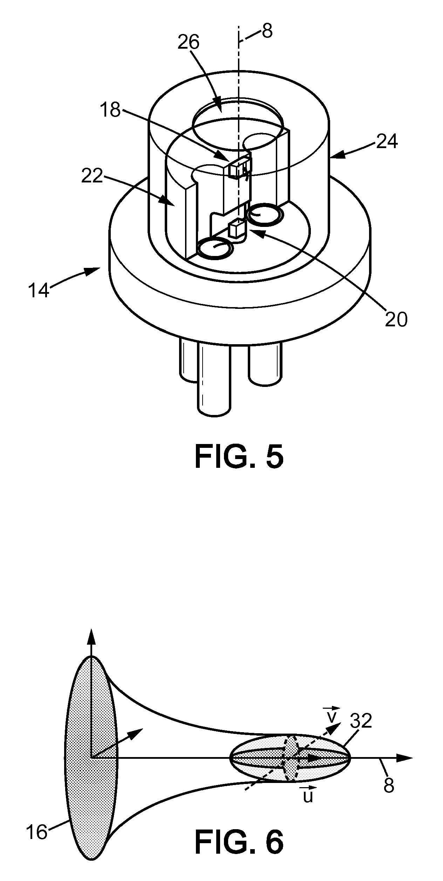

La première partie 10 présente des déformations symétriques aux déformations des zones en creux du support 2. En choisissant la même orientation que celle définie précédemment, on retrouve ainsi dans la face inférieure de la première partie 10 du capot 4 des zones en creux de forme sensiblement cylindrique circulaire. La première partie 10 du capot 4 définit alors avec le support 2 des logements de forme globale cylindrique circulaire destinés chacun à accueillir un détecteur, par exemple un détecteur tel le détecteur 14 illustré sur la figure 5. À chacun de ces détecteurs 14 est associée une optique de focalisation 16 visible sur les figures 1 à 3.

La seconde partie 12 du capot 4 est formée de quatre pans qui sont chacun sensiblement plans et qui s'étendent, d'une part, perpendiculairement au support 2 et, d'autre part, à un axe 8. Si l'on suppose que le support 2 s'étend dans un plan essentiellement horizontal, la seconde partie 12 du capot 4 forme un demi-cylindre d'axe vertical et de base octogonale régulière. Chaque pan de la seconde partie 12 du capot 4 sert de support et de protection pour une carte électronique 6.

Chaque détecteur 14 comporte en son centre une diode laser 18. Cette dernière est destinée à émettre des faisceaux selon une direction d'émission. Par construction, le support 2 et le capot 4 sont tels que les axes 8 définis précédemment correspondent chacun à une direction d'émission d'une diode laser 18 venant prendre place dans un logement prévu à cet effet par le support 2 et le capot 4.

Sur l'axe 8 correspondant à une diode laser 18, on trouve une photodiode 20. On choisit ici arbitrairement une orientation et on suppose que la photodiode 20 se trouve à chaque fois en arrière de la diode laser 18.

L'ensemble formé par la diode laser 18 et la photodiode 20 est disposé dans un dissipateur thermique 22, lui-même monté dans un boitier 24 (figure 5). En avant de la diode laser 18, le boitier 24 présente une fenêtre 26 pour qu'un faisceau laser émis selon l'axe 8 par la diode laser 18 puisse atteindre l'optique de focalisation 16 correspondante.

Chaque détecteur 14 utilisé pour la réalisation d'un dispositif selon la présente invention est par exemple un détecteur tel celui décrit dans le document WO2011/042678 dont le contenu est incorporé ici par référence (notamment page 5, ligne 26 à page 7, ligne 13 et figue 1).

La technique mise en oeuvre pour réaliser une mesure de la vitesse du vent est une technique appelée « self-mixing » ou encore à réinjection optique. Cette technique est une technique d'anémométrie laser à effet Doppler par faisceau incident unique. Selon cette technique, un faisceau est émis par une diode laser comportant une cavité optique. Lorsqu'il rencontre une particule en suspension dans l'air, une fraction de ce faisceau est réfléchie formant ainsi un faisceau réfléchi qui est injecté à nouveau à l'intérieur de la diode laser, et plus précisément dans la cavité optique présente dans la diode laser. Cette technique permet de profiter du gain optique de la zone active de la diode laser. De façon classique en anémométrie laser, une interférence est réalisée entre un faisceau de référence et un faisceau réfléchi par un élément dont on souhaite déterminer la vitesse. Ici le mélange interférentiel est réalisé au sein de la diode laser qui envoie le faisceau incident sur la particule dont on souhaite mesurer la vitesse.

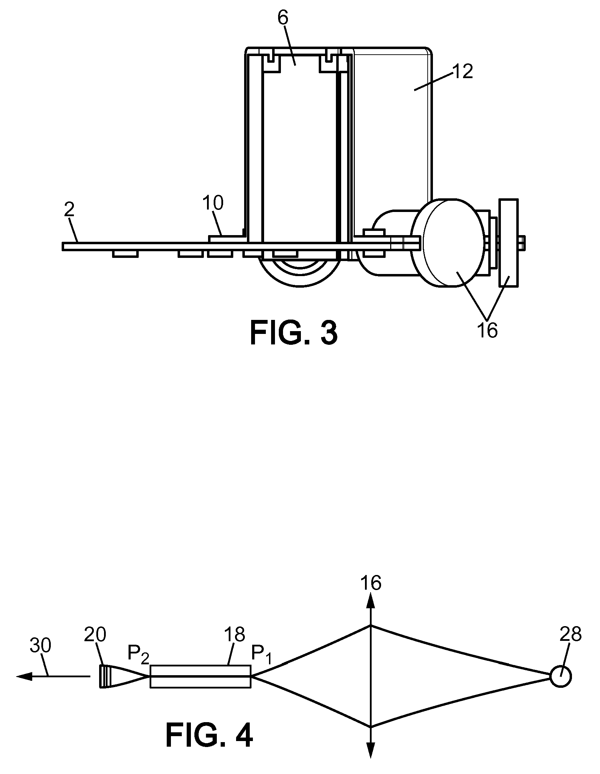

La figure 4 illustre schématiquement le principe de mesure utilisé ici. La diode laser 18 est une diode laser à semi-conducteurs présentant une zone active modélisée par une cavité optique Fabry-Pérot. Cette diode laser émet par l'avant une puissance optique $P_1$ et par l'arrière une puissance optique $P_2$. Le faisceau émis par l'avant est focalisé par l'optique de focalisation 16 correspondante puis est réfléchi par une particule 28. Le faisceau réfléchi par la particule 28 retourne à l'intérieur de la diode laser 18 et vient moduler le signal de puissance $P_2$ sortant par l'arrière de la diode laser 18. La photodiode 20 génère alors un signal 30 représentatif de la puissance optique qu'elle a reçue.

On peut supposer que les faisceaux laser sortis de la diode laser 18 sont gaussiens de section elliptique. Le système optique correspondant à l'optique de focalisation 16 est par exemple une lentille asphérique convergente. Dans ce cas, la forme gaussienne des faisceaux est conservée. Comme illustré sur la figure 6, le faisceau avant émis par la diode laser 18 est focalisé par l'optique de focalisation 16 de manière à former un volume de mesure 32 qui est de forme sensiblement ellipsoïdale. Ce volume de mesure 32 correspond à l'ensemble des points de l'espace où le passage d'une particule 28 donne un rapport signal sur bruit suffisant pour permettre une détection par la photodiode 20 (et la carte électronique 6 associée).

On suppose qu'une particule 28 traverse le volume de mesure 32 avec une vitesse $\vec{V}$. La vitesse de la particule 28 est considérée comme étant aussi la vitesse du vent. Cette particule réfléchit une portion du faisceau émis par la diode laser et réémet ladite portion vers la diode laser 18. Cette onde rétrodiffusée est décalée en fréquence par rapport à l'onde laser incidente. Lorsque le faisceau réfléchi est injecté dans la cavité optique de la diode laser, un couplage entre la zone émettrice de la diode laser et la zone de passage de faisceau réfléchi est réalisé. Un phénomène d'interférence se produit à l'intérieur de la cavité laser. Ainsi, la puissance optique $P_2$ émise par l'arrière de la diode laser 18 arrive au niveau de la photodiode 20 en étant modulée à la fréquence de décalage Doppler, cette dernière étant directement proportionnelle à la vitesse de la particule. La modulation en puissance s'écrit alors :

$$P_2(t) = P_0(1 + m\cos(2\pi\,\Delta f\,t))$$

La fréquence Doppler s'exprime de la manière suivante :

$$\Delta f = \frac{2}{\lambda}\,\left|\vec{V}.\vec{u}\right|$$

V est le vecteur vitesse de la particule considérée comme le vecteur vitesse du vent.
$\vec{u}$ est le vecteur unitaire correspondant à l'axe 8 optique ou encore l'axe de propagation du faisceau laser.
$|\vec{V}.\vec{u}|$ est le produit scalaire donnant la projection du vecteur vitesse sur l'axe du faisceau laser.
$\lambda$ est la longueur d'onde du laser.
*m* est l'indice de modulation en amplitude créé par l'interférence.

L'indice de modulation du signal est faible, de l'ordre de $10^{-5}$, si bien que même après amplification, le signal temporel est toujours noyé dans le bruit du système d'acquisition. À titre d'exemple illustratif, l'indice de modulation est d'environ $5{,}5\,10^{-6}$ pour une particule présentant un rayon de $0{,}1\,\mu m$. En revanche, dans le domaine fréquentiel, si le rapport signal sur bruit (*RSB*) est suffisant, le spectre d'un tel signal contient un pic détectable correspondant à la fréquence Doppler. Il est possible de retrouver la position du pic en appliquant une transformée de Fourrier rapide (*FFT*) et ainsi en déduire la vitesse du vent.

La chaîne d'acquisition contenant la diode laser 18, la photodiode 20, une électronique d'amplification et une électronique du traitement du signal intégrées dans la carte électronique 6 correspondante permet ainsi de mesurer une projection du vecteur vitesse du vent sur l'axe du faisceau laser et constitue le module de base d'un anémomètre laser par réinjection optique.

Les mesures réalisées par chaque détecteur permettent de connaître la composante du vecteur vitesse V sur l'axe optique du système correspondant. En théorie, il est donc nécessaire d'avoir au moins deux détecteurs orthogonaux pour pouvoir déterminer la projection d'un vecteur vitesse dans un plan et trois détecteurs orthogonaux pour connaitre le module d'un vecteur vitesse quelconque dans l'espace. Au lieu d'utiliser plusieurs détecteurs et donc plusieurs sources laser, on peut envisager l'utilisation d'un composant mobile ou la mise en oeuvre d'un séparateur de faisceaux.

La présente invention propose de mettre en oeuvre plusieurs détecteurs à réinjection optique.

Selon la présente invention, il est proposé d'utiliser deux détecteurs 14 dont les axes 8 optiques sont perpendiculaires l'un par rapport à l'autre pour déterminer la valeur de la composante vitesse de particules en suspension dans l'air dans le plan défini par les deux axes 8 correspondants. Comme expliqué ci-après, il a été constaté qu'un anémomètre avec uniquement deux détecteurs présentait des zones aveugles dans lesquelles il n'était pas possible de réaliser de manière fiable la mesure de la vitesse des particules. De manière originale, il est donc proposé le rajout non pas d'un mais de deux détecteurs, les deux détecteurs 14 rajoutés présentant également des axes optiques perpendiculaires l'un à l'autre. On obtient alors quatre détecteurs qui sont disposés de telle sorte que leurs axes optiques se coupent au point O tel que décrit précédemment. Comme mentionné précédemment, on a deux paires de détecteurs 14, les détecteurs d'une même paire ayant des axes 8 optiques perpendiculaires. Comme illustré sur les figures 1 à 3, une forme de réalisation préférée prévoit que les deux paires de détecteurs sont disposées à chaque fois de telle sorte qu'un axe 8 d'un détecteur d'une paire de détecteurs forme la bissectrice des axes 8 optiques de l'autre paire de détecteurs. En d'autres termes, on a quatre axes optiques passant par un même point O et chaque axe optique fait avec l'axe optique voisin un angle de 45 degrés.

Cette forme de réalisation préférée n'est pas la seule forme de réalisation possible selon la présente invention. D'autres positions relatives entre deux paires de détecteurs pourraient par exemple être envisagées.

La suite de la description est une justification de la solution mise en oeuvre par la présente invention.

Pour réaliser un anémomètre de qualité, il convient de pouvoir tout d'abord faire des mesures précises. Ensuite, des vitesses de vent faibles doivent également être mesurées. Enfin, le volume de mesure doit être suffisamment grand pour contenir assez de particules en suspension et permettre ainsi de réaliser des mesures à une fréquence assez élevée.

En ce qui concerne la précision de la mesure à titre illustratif, on propose d'arriver à une précision de 0,1 m/s pour une vitesse de 20 m/s. Sur la base des calculs ci-après, il est bien sûr possible d'utiliser d'autres valeurs numériques données ici à titre purement illustratif et non limitatif.

Si l'on choisit alors un faisceau laser présentant une longueur d'onde de par exemple 785 nm et une vitesse parfaitement colinéaire au faisceau laser, on obtient une fréquence Doppler, avec la formule indiquée plus haut, de 50 MHz, c'est-à-dire :

$$\Delta f = 50 \text{ MHz}$$

$$\lambda = 785 \text{ nm}$$

$$V = 20 \text{ m/s}$$

Si on utilise une transformée de Fourier rapide, avec 1.024 points en échantillonnant à une fréquence F = 100 MHz (= $2\Delta f$ pour respecter le théorème de Nyquist-Shannon), on a une erreur de traitement :

$$E = \lambda F/4N$$

E étant l'erreur sur la vitesse engendrée par le traitement,
F la fréquence d'échantillonnage, et
N le nombre de points d'échantillonnage.

Avec les valeurs numériques données à titre d'exemple numérique non limitatif, on obtient ici E = 0,02 m/s.

On suppose que cette erreur de traitement E est la même dans le cas plus général où le faisceau laser n'est pas colinéaire au vecteur vitesse.

Une autre source d'erreur peut être mécanique. En effet, il est possible que lors du positionnement de la diode laser 18, son axe 8 soit désaligné avec la direction souhaitée en raison du montage mécanique. Nous appelons $\alpha$ l'erreur angulaire de désalignement et A l'angle entre l'axe 8 et le vecteur vitesse du vent.

Ainsi $V_{r\,alignement} = V\cos A$ en l'absence de désalignement et
$V_r d_{ésalignement} = V\text{COS} (A + \alpha)$ dans le cas contraire, soit

$$V_{r\,désalignement} = V\cos (A \pm \alpha)$$

$$V_{r\,désalignement} = V (\cos A \pm \alpha \sin A - \alpha^2/2 \cos A)$$

$$V_{r\,désalignement} = V_{r\,alignement} \pm V (\alpha \sin A - \alpha^2/2 \cos A)$$

Ainsi l'erreur maximale due au désalignement est de :

$$\delta V_{r\,désalignement} = V\alpha$$

L'erreur maximale engendrée par le traitement, le désalignement et la direction du vent est donc :

$$E = \lambda F/4N + V\alpha$$

Pour pouvoir réaliser des mesures, comme indiqué plus haut, il convient qu'un nombre suffisant de particules traversent le volume de mesure 32 illustré sur la figure 6. Le nombre de particules traversant le volume de mesure 32 dépend tout d'abord du nombre de particules par unité de volume. Ce nombre de particules dépend ensuite de la vitesse du vent. Plus le vent est important, plus le nombre de particules traversant un volume donné sera important. Le nombre de particules est également proportionnel à la surface de volume de mesure vue par le vecteur vitesse. Dans la forme ellipsoïdale représentée sur la figure 6, on remarque que c'est lorsque le vecteur vitesse est perpendiculaire à l'axe 8 que la surface du volume de mesure 32 apparait comme étant la plus grande pour le vecteur vitesse. Pour une unité de temps donnée, le nombre de particules traversant le volume de mesure sera donc le suivant :

$$F_{dét} = \rho V S'$$

$F_{dét}$ est le nombre de particules calculé
$\rho$ est la densité de particules par unité de volume
V est la norme du vecteur vitesse
S' est la surface du volume de mesure vue par le vecteur vitesse.

En outre, si B est l'angle entre l'axe 8 optique du détecteur considéré et le vecteur vitesse, on a :

$$F_{dét} = \rho V S \sin B$$

S étant la surface maximale du volume de mesure 32 visible par le vecteur vitesse, c'est-à-dire la surface du volume de mesure vue perpendiculairement par rapport à l'axe 8 optique du détecteur correspondant.

On a donc :

$$\sin B = S'/S$$

On remarque donc ici que le nombre de particules va diminuer d'autant plus que le vecteur vitesse est parallèle à l'axe 8 optique du détecteur.

Pour ce qui concerne la mesure de faibles vitesses, le bruit en 1/f et la fréquence de coupure basse de l'amplificateur se reportent sur le premier point de la transformée de Fourrier rapide. Ainsi, la fréquence correspondante donne la limite basse de vitesse mesurable :

$$F/N = (2V \cos B) / \lambda$$

Donc :

$$\cos B = (\lambda F) / (2VN)$$

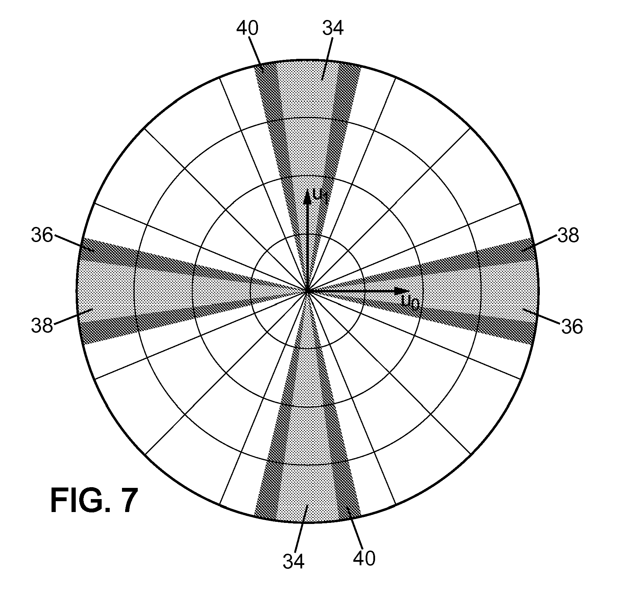

Les résultats de ces calculs sont illustrés sur la figure 7

Sur cette figure, on a représenté une direction $u_0$ et une direction $u_1$ qui correspondent à deux directions orthogonales de deux détecteurs 14. Pour le détecteur 14 orienté selon la direction $u_0$, on obtient une zone aveugle 34 qui correspond à la zone dans laquelle il ne sera pas possible de détecter des vitesses trop faibles par le détecteur correspondant. De même, on a une zone aveugle 36 ne pouvant pas être détectée par le détecteur 14 orienté selon la direction $u_1$.

Pour le critère concernant le nombre de particules pouvant être détectées par unité de temps, on a pour le détecteur orienté selon la direction $u_0$ une zone aveugle 38 et pour le détecteur 14 orienté selon la direction $u_1$ une zone aveugle 40.

Pour tous les vecteurs vitesse se trouvant dans le repère ($u_0$, $u_1$), une mesure correspondante peut être effectuée par une paire de détecteurs avec plus ou moins de précision. Bien entendu, comme il ressort des calculs ci-dessus, la précision dépendra du positionnement mécanique des détecteurs, de la fréquence d'échantillonnage choisie ainsi que du nombre de points d'échantillonnage, et aussi de l'angle entre le faisceau laser et le vecteur vitesse du vent.

On pourrait utiliser uniquement deux des détecteurs 14, disposés orthogonalement, si l'on souhaite mesurer uniquement des vecteurs vitesse ne se trouvant pas dans des zones aveugles. On réalise alors un anémomètre qui peut donner par exemple d'excellents résultats lorsqu'on arrive à l'orienter approximativement par rapport au vent dominant. Il convient de noter qu'un anémomètre avec deux détecteurs disposés orthogonalement permet également des mesures dans les zones aveugles si l'on accepte une dégradation de la qualité de la mesure du vent pour certaines orientations et/ou certaines vitesses.

Pour pouvoir mesurer avec un anémomètre fixe des vents multidirectionnels et/ou pour garantir une mesure de qualité quelle que soit la direction du vent, l'invention propose d'utiliser deux paires de détecteurs 14 orthogonaux comme représenté sur les figures 1 à 3. On choisit ici de disposer une paire de détecteurs de telle sorte que ses zones aveugles (figure 7) ne recouvrent pas les zones aveugles de l'autre paire de détecteurs. Il est alors possible de mesurer tous les vecteurs vitesse, quelles que soient leurs composantes dans le plan des détecteurs.

Ainsi, la mesure d'une vitesse du vent dans un plan peut se faire à l'aide de deux ou quatre détecteurs. Le traitement des signaux obtenus au niveau des (quatre) détecteurs est fait en parallèle. On émet ainsi simultanément des faisceaux dans chaque direction correspondant à un détecteur. Les particules en suspension dans l'air réfléchissent une partie des faisceaux émis et renvoient vers les détecteurs un faisceau réfléchi. Celui-ci pénètre à l'intérieur de la cavité optique de la diode laser à l'origine de l'émission qui a donné lieu à la réflexion. Les faisceaux réfléchis interfèrent alors dans chacune des diodes laser qui émettent en arrière un signal modulé détecté par une photodiode. La photodiode de chaque détecteur fournit un signal sous forme de courant électrique proportionnel à la puissance reçue. Ce signal reproduit également la modulation de puissance due à l'interférence et est ensuite traité au sein d'un amplificateur transimpédance. Le signal sous forme de courant est transformé et amplifié lors de cette étape en signal sous forme de tension. Le signal ainsi obtenu (tension) est échantillonné et analysé par transformée de Fourrier rapide. Un seuillage est ensuite réalisé en choisissant par exemple comme niveau de seuil un niveau trois fois supérieur au niveau de bruit. Pour une unité de temps donné, par exemple une seconde (1s), on détermine alors les fréquences Doppler correspondant aux modulations des signaux détectés.

Le traitement est réalisé au sein de tous les détecteurs simultanément. Les résultats obtenus sont alors analysés et recomposés pour fournir la vitesse du vent dans le plan des détecteurs.

La présente invention permet ainsi d'obtenir un anémomètre fournissant des mesures fiables de la vitesse du vent. Bien qu'utilisant plusieurs faisceaux lasers, la solution proposée par la présente invention est d'un prix de revient peu élevé car les détecteurs utilisés peuvent être bon marché, du fait notamment de l'absence de systèmes optiques complexes de taille importante.

La présente invention ne se limite pas à la forme de réalisation préférée décrite ci-dessus à titre d'exemple non-limitatif et aux variantes évoquées. Elle concerne également toutes les variantes de réalisation à la portée de l'homme du métier dans le cadre des revendications ci-après.

Ainsi, la description prévoit l'utilisation de quatre détecteurs. Ceci permet une mesure de la vitesse dans un plan. La présente invention pourrait bien entendu être également utilisée pour mesurer la vitesse du vent dans l'espace en augmentant le nombre de détecteurs.

Le type des détecteurs utilisés est donné uniquement à titre d'exemple illustratif. D'autres détecteurs laser à réinjection optique peuvent être utilisés.

En outre, le montage des détecteurs entre un support et un capot est un exemple de montage. Tout autre type de montage peut être utilisé pour maintenir deux détecteurs orthogonaux l'un par rapport à l'autre et/ou pour disposer quatre (ou plus) détecteurs laser.

## Revendications

**1.** Dispositif de détermination de la vitesse du vent comportant au moins deux sources laser (18) émettant des faisceaux coplanaires dans différentes directions, à chaque source laser (18) étant associés :

- des moyens de focalisation (16) du faisceau émis,
- des moyens de réception (20) d'un faisceau réfléchi obtenu après réflexion par une particule (28) présente dans l'air du faisceau émis correspondant,
- des moyens de transmission (20) d'un signal d'interférences intervenant entre le faisceau émis et le faisceau réfléchi,
- des moyens de traitement (6) des signaux d'interférences obtenus,

chaque source laser (18) comportant une cavité optique dans laquelle est réinjecté le faisceau réfléchi pour obtenir une interférence avec le faisceau émis,
**caractérisé en ce qu'**il comporte quatre sources laser (18) formant deux paires de sources,
**en ce que** chaque paire de sources définit un repère orthogonal dans le plan,

**en ce que** les deux repères orthogonaux ainsi définis présentent une même origine, et
**en ce que** les deux repères orthogonaux sont décalés entre eux d'un angle supérieur à 10°.

2. Dispositif selon la revendication 1, **caractérisé en ce que** les deux repères orthogonaux sont décalés entre eux d'un angle compris entre 30° et 60 °.

3. Dispositif selon l'une des revendications 1 ou 2, **caractérisé en ce que** les deux repères orthogonaux sont décalés entre eux de 45 °.

4. Dispositif selon l'une des revendications 1 à 3, **caractérisé en ce que** les sources laser sont semblables.

5. Procédé de détermination de la vitesse du vent comportant les étapes suivantes :

   - émission d'un faisceau laser dans deux directions différentes à partir à chaque fois d'une diode laser (18),
   - récupération au sein de chaque diode laser (18) d'un faisceau réfléchi par une particule en suspension dans l'air,
   - interférence du faisceau réfléchi avec le faisceau émis dans chaque diode laser (18),
   - collecte d'un signal modulé,
   - amplification du signal modulé,
   - échantillonnage du signal amplifié,
   - transformation de Fourrier rapide des valeurs échantillonnées,
   - seuillage du signal obtenu,
   - détermination de la fréquence Doppler pour chaque signal, et
   - calcul de la vitesse du vent par recomposition des résultats obtenus,

   **caractérisé en ce que** les deux directions d'émission sont perpendiculaires, **en ce que** les étapes sont réalisées simultanément pour quatre diodes laser (18) formant deux paires de sources, **en ce que** chaque paire de sources définit un repère orthogonal dans le plan, et **en ce que** les deux repères orthogonaux ainsi définis présentent une même origine et sont décalés entre eux d'un angle supérieur à 10°.

**Patentansprüche**

1. Vorrichtung zur Bestimmung der Windgeschwindigkeit, umfassend mindestens zwei Laserquellen (18), die koplanare Strahlen in unterschiedlichen Richtungen emittieren, wobei mit jeder Laserquelle (18) Folgendes verknüpft ist:

   - Fokussierungsmittel (16) des emittierten Strahls,
   - Empfangsmittel (20) eines reflektierten Strahls, der nach der Reflexion durch ein Teilchen (28) erhalten wird, das in der Luft des entsprechenden emittierten Strahls vorhanden ist,
   - Übertragungsmittel (20) eines Interferenzsignals, das sich zwischen dem emittierten Strahl und dem reflektierten Strahl einschaltet,
   - Verarbeitungsmittel (6) der erhaltenen Interferenzsignale,

   wobei jede Laserquelle (18) einen optischen Resonator umfasst, in den der reflektierte Strahl wieder eingespeist wird, um eine Interferenz mit dem emittierten Strahl zu erhalten,
   **dadurch gekennzeichnet, dass** sie vier Laserquellen (18) umfasst, die zwei Paare von Quellen bilden,
   dass jedes Paar von Quellen ein Koordinatensystem in der Ebene definiert,
   dass die zwei auf diese Weise definierten Koordinatensysteme einen gleichen Ursprung aufweisen und
   dass die zwei Koordinatensysteme zueinander in einem Winkel verschoben sind, der größer ist als 10°.

2. Vorrichtung nach Anspruch 1, **dadurch gekennzeichnet, dass** die zwei Koordinatensysteme zueinander in einem Winkel verschoben sind, der zwischen 30° und 60° liegt.

3. Vorrichtung nach einem der Ansprüche 1 oder 2, **dadurch gekennzeichnet, dass** die zwei Koordinatensysteme zueinander um 45° verschoben sind.

4. Vorrichtung nach einem der Ansprüche 1 bis 3, **dadurch gekennzeichnet, dass** die Laserquellen ähnlich sind.

5. Verfahren zur Bestimmung der Windgeschwindigkeit, umfassend die folgenden Schritte:

- Emission eines Laserstrahls in zwei unterschiedlichen Richtungen, jedes Mal von einer Laserdiode (18),
- Rückgewinnung an jeder Laserdiode (18) eines Strahls, der von einem Teilchen reflektiert wird, das in der Luft schwebt,
- Interferenz des reflektierten Strahls mit dem emittierten Strahl in jeder Laserdiode (18),
- Erfassung eines modulierten Signals,
- Verstärkung des modulierten Signals,
- Abtasten des verstärkten Signals,
- schnelle Fourier-Transformation der abgetasteten Werte,
- Schwellenwertvergleich des erhaltenen Signals,
- Bestimmung der Dopplerfrequenz für jedes Signal und
- Berechnung der Windgeschwindigkeit durch eine Wiederzusammensetzung der erhaltenen Ergebnisse,

**dadurch gekennzeichnet, dass** die zwei Emissionsrichtungen senkrecht sind, dass die Schritte gleichzeitig für vier Laserdioden (18) ausgeführt werden, die zwei Paare von Quellen bilden, dass jedes Paar von Quellen ein Koordinatensystem in der Ebene definiert und dass die zwei auf diese Weise definierten Koordinatensysteme einen gleichen Ursprung aufweisen und zueinander in einem Winkel verschoben sind, der größer ist als 10°.

## Claims

1. Device for determining wind speed comprising at least two laser sources (18) emitting coplanar beams in different directions, each laser source (18) being associated with:

   - means (16) for focusing the emitted beam,
   - means (20) for receiving a reflected beam obtained after reflection by a particle (28) present in the air of the corresponding emitted beam,
   - means (20) for transmitting an interference signal occurring between the emitted beam and the reflected beam,
   - means (6) for processing the obtained interference signals,

   each laser source (18) comprising an optical cavity into which the reflected beam is reinjected in order to obtain an interference with the emitted beam,
   **characterised in that** it comprises four laser sources (18) forming two pairs of sources,
   **in that** each pair of sources defines an orthogonal reference in the plane,
   **in that** the two orthogonal references thus defined have the same origin, and
   **in that** the two orthogonal references are offset with respect to one another by an angle of more than 10°.

2. Device according to Claim 1, **characterised in that** the two orthogonal references are offset with respect to one another by an angle between 30° and 60°.

3. Device according to one of Claims 1 or 2, **characterised in that** the two orthogonal references are offset with respect to one another by 45°.

4. Device according to one of Claims 1-3, **characterised in that** the laser sources are alike.

5. Method for determining wind speed comprising the following steps:

   - emission of a laser beam in two different directions each from a laser diode (18),
   - recovery within each laser diode (18) of a beam reflected by a particle suspended in the air,
   - interference of the reflected beam with the beam emitted in each laser diode (18),
   - collection of a modulated signal,
   - amplification of the modulated signal,
   - sampling of the amplified signal,
   - fast Fourier transform of the sampled values,
   - thresholding of the signal obtained,
   - determination of the Doppler frequency for each signal, and
   - calculation of the wind speed by recomposition of the results obtained,

   **characterised in that** the two emission directions are perpendicular, **in that** the steps are carried out simultaneously for four laser diodes (18) forming two pairs of sources, **in that** each pair of sources defines an orthogonal reference in the plane, and **in that** the two orthogonal references thus defined have the same origin and are offset with respect to one another by an angle of more than 10°.

**FIG. 1**

**FIG. 2**

**FIG. 3**

**FIG. 4**

FIG. 5

FIG. 6

FIG. 7

## RÉFÉRENCES CITÉES DANS LA DESCRIPTION

**Documents brevets cités dans la description**

- WO 2009046717 A
- WO 2011042678 A
- WO 0029854 A